# NEUE EUROPÄISCHE PATENTSCHRIFT

(11) **EP 1 344 722 B2**
(45) Veröffentlichungstag und Bekanntmachung des Hinweises auf die Entscheidung über den Einspruch: **19.10.2011**
(45) Hinweis auf die Patenterteilung: 15.11.2006
(21) Anmeldenummer: 03003228.8
(22) Anmeldetag: 20.02.2003
(51) Int. Cl.: B65D 81/00, A47J 31/06

(54) **Portionenkapsel zur Herstellung eines Getränks**
Single portion cartridge for the preparation of a beverage
Cartouche mono-dose pour la préparation d'une boisson

(30) Priorität: 14.03.2002 DE 10211327
(43) Veröffentlichungstag der Anmeldung: 17.09.2003
(73) Patentinhaber: Caffita System S.p.A., 40041 Gaggio Montano BO (IT)
(72) Erfinder: Schifferle, Rene, 5312 Döttingen (CH)
(74) Vertreter: Ponchiroli, Simone

(56) Entgegenhaltungen:
- EP-A- 0 468 078
- EP-A- 1 101 430
- EP-A1- 1 101 430
- EP-A2- 0 272 922
- FR-A- 2 556 323
- FR-A- 2 668 451
- US-A- 2 778 739
- US-A- 2 778 739
- US-A- 4 921 712

## Beschreibung

Die Erfindung betrifft eine Portionenkapsel mit einer partikelförmigen mittels Wasser extrahierbaren Substanz zur Herstellung eines Getränks nach dem Oberbegriff des Anspruchs 1.

Eine Portionenkapsel der vorstehend genannten Art ist aus EP 1 101 430 AT oder US-A 2,778,379 bekannt.

In EP 1 101 430 A1 ist ein Getränke-Filter-Kapsel-System angegeben, welches eine abgestufte Portionenkapsel aufweist. Die Kapsel weist mehrere Stufen auf, die zum Abstützen eines Filterelements bzw. einer porösen Membrane dienen. Zwischen dem Filterelement und der Membrane ist des Getränkepulver aufgenommen. Sowohl zwischen dem Deckel und dem Filterelement als auch zwischen dem Boden und der Membrane verbleibt ein Zwischenraum, der zum seitlichen Einführen eines Einlassrohrs bzw. eines Ablaufrohrs vorgesehen ist.

Aus US-A 2,778,739 ist eine mehrteilige Portionenkapsel bekannt. Diese besteht aus einem schalenförmigen Kapselgehäuse, in das auf der Unterseite ein aus Metall gefertigter Einsatz eingesetzt ist. Die Oberseite ist mittels eines angeschweissten Deckels verschlossen. Der genannte Einsatz weist eine runde äussere und eine sich auf der Innenseite anschliessende zentrale Vertiefung auf. Die zentrale Vertiefung ist tiefer als die äussere und kann ein Aufstechmittel aufnehmen, mit dem der Boden der Kapsel aufgestochen wird. Das Aufstechmittel dient gleichzeitig zum Zuführen des Brühwassers. Der Einsatz weist eine Vielzahl von Öffnungen auf, über welche das Brühwasser in das Innere der Kapsel einströmen kann. Zum Aufstechen des Kapseldeckels sind Aufstechfinger vorgesehen.

Portionenkapseln sind in vielfältigen Varianten bekannt, wobei insbesondere Portionenkapseln zur Aufnahme von gemahlenem Kaffee zur Erzeugung von Espressokaffee bekannt sind. Der grundsätzliche Vorteil solcher Kapseln liegt darin, dass sie gasdicht sind und das aufgenommene Kaffeepulver über einen längeren Zeitraum frisch halten. Zum Aufbrühen des in der Kapsel aufgenommenen Kaffeepulvers werden bis anhin überwiegend halbautomatische Espressokaffeemaschinen verwendet, bei denen die Kapsel mit dem Verschlussdeckel nach unten in einen Kapselhalter eingesetzt wird. Der Kapselhalter wird anschließend manuell an der Kaffeemaschine befestigt, wobei die Kaffeemaschine im Bereich der Portionenhalterbefestigung einen mit radialen Austrittsöffnungen für die Durchleitung von Brühwasser versehenen Brühdorn aufweist, der den Boden der Kapsel beim Befestigen des Kapselhalters an der Kaffeemaschine durchstößt. Der Kapselhalter seinerseits ist am Boden mit einer Vielzahl von auf einem Ablaufrost angeordneten Erhebungen versehen. Diese Erhebungen durchdringen den Deckel der Kapsel und brechen ihn auf, sobald Brühwasser in den Siebhalter eingeleitet wird und die Kapsel durch den hydraulischen Überdruck gegen diese Erhebungen gedrückt wird. Beim nachfolgenden Aufbrühvorgang wird das Brühwasser über den Brühdorn in die Kapsel eingeleitet, so dass es das darin aufgenommene Kaffeepulver unter Überdruck durchströmen und über die Öffnungen im Deckel austreten kann. Das frisch aufgebrühte Kaffeegetränk kann über den Ablaufrost abfliessen und auf der Unterseite des Siebhalters über Auslässe austreten. Eine Kaffeemaschine mit einer derartigen Vorrichtung zur Extraktion von in einer Kapsel aufgenommenem Kaffeepulver ist beispielsweise aus der EP 0 512 470 bekannt.

Der Nachteil eines mit radialen Öffnungen versehenen Brühdorns besteht darin, dass sich der für das Brühwasser auslassrelevante Querschnitt des Brühdorns durch Verschmutzung relativ schnell zusetzt. Als Ursachen dafür können beispielsweise Kaffeefett, Kaffeepartikel sowie Kalk im Brühwasser angeführt werden. Mit zunehmender Verschmutzung des Brühdorns nimmt jedoch auch die Qualität des aufgebrühten Kaffeegetränks ab. Aus hydraulischer Sicht besteht eine weitere Problematik derartiger Brühdorne darin, dass innerhalb der Kapsel Totvoluminas auftreten, so dass Teile des Kaffeepulvers vom Brühwasser nicht oder nur ungenügend extrahiert werden.

Ein weiterer Nachteil des genannten Brühdorns besteht darin, dass dieser in der Kapsel eine relativ grosse Aufstechöffnung hinterlässt, über welche insbesondere nach dem Herausziehen des Brühdorns ausgelaugtes Kaffeepulver austreten kann, welches letztendlich die Kaffeemaschine verschmutzen kann. Diese Problematik tritt insbesondere dann auf, wenn die Kapsel so in die Kaffeemaschine eingelegt wird, dass sich das aufzustechende Kapselhinterteil vertikal nach unten erstreckt, so dass das ausgelaugte Kaffeepulver nach dem Herausziehen des Brühdorns durch die Schwerkraft nach unten aus der Kapsel herausfallen kann.

Aus der EP 0 521 188 ist eine weitere Vorrichtung zur Extraktion von in einer Kapsel aufgenommenem Kaffeepulver bekannt. Nebst einem Brühdorn zum Einleiten des Brühwassers in die Kapsel ist bei einem bevorzugten Ausführungsbeispiel dieser Vorrichtung ein Wasserverteilgitter vorgesehen, das auf seiner Unterseite vorstehende Elemente zum Perforieren der Kapseloberseite aufweist. Das Brühwasser wird über das Wasserverteilgitter auf der Oberseite der Kapsel verteilt, und kann über den Spalt zwischen den vorstehenden Elementen und dem Kapseldeckel in das Innere der Kapsel eindringen.

Im weiteren ist aus der EP 0 512 468 eine gattungsgemäße Portionspackung bekannt, welche sich ebenfalls zur Aufnahme von gemahlenem Kaffee eignet. Die aus einem Verbundmaterial bestehende Portionspackung weist kein Filter und keinen Schwächungsbereich auf, wobei der Boden oder der Deckel dazu bestimmt ist, nur unter der Einwirkung des Drucks des Extraktionsfluids zu Beginn der Extraktion aufzureißen.

Ein grundsätzlicher Nachteil der bekannten Portionspackungen besteht darin, dass maschinenseitig ein großer Aufwand betrieben werden muss, damit das in den Portionspackungen aufgenommene Kaffeepulver vom Brühwasser möglichst gleichmäßig durchströmt und vollständig extrahiert wird. Außerdem besteht bei Portionspackungen, die nur unter der Einwirkung des Drucks des Extraktionsfluids zu Beginn der Extraktion aufreißen die Gefahr, dass die Kapsel nicht an allen gewünschten Stellen aufreißt -perforiert wird- so dass das Kaffeepulver wiederum nur ungenügend extrahiert wird. Ein weiterer Nachteil ist darin zu sehen, dass die Perforationsöffnungen teilweise unerwünscht gross sind, was für das durchströmende Brühwasser nicht ideal ist, indem dem Brühwasser nur ein geringer Strömungswiderstand entgegengesetzt wird und ausserdem die Gefahr besteht, dass über eine zu große Öffnung Kaffeepulver aus der Portionspackung austreten kann, welches die Kaffeemaschine verschmutzt.

Ausgehend vom genannten Stand der Technik liegt der Erfindung die Aufgabe zugrunde, eine Portionenkapsel der vorstehend genannten Art bereitzustellen, bei der die darin aufgenommene, extrahierbare Substanz vom Wasser gleichmässig durchströmt und möglichst gut extrahiert wird.

Nach der Erfindung wird hierzu eine Portionenkapsel bereitgestellt, deren Merkmale in den Patentansprüchen 1 bis 4 angegeben sind.

Durch das Vorsehen von zumindest einem Organ der genannten Art kann auf der jeweiligen Seite der Portionenkapsel, unabhängig von der Anzahl und Grösse der Aufstechöffnung(en), eine gleichmässige Verteilung des zum Extrahieren der Substanz eingeleiteten Wassers sichergestellt werden.

Bevorzugte Weiterbildungen der Portionenkapsel sind in den abhängigen Ansprüchen 5 bis 16 angegeben.

Vorzugsweise wird auf beiden Seiten der Substanz, d.h. zwischen dem Kapselboden und der Substanz sowie zwischen dem Kapseldeckel und der Substanz ein Verteil-bzw. Sammelorgan für das Wasser angeordnet. Nebst einer gleichmässigen Verteilung des Wassers hat dies den Vorteil, dass die Substanz zwischen diesen beiden Organen derart eingeschlossen ist, dass sie nicht über die Aufstechöffnungen austreten kann, auch wenn diese relativ gross sind.

Das Einbringen eines Organs zwischen dem Kapseldeckel und der Substanz hat den weiteren Vorteil, dass nach dem Einbringen des Verteilorgans kaum mehr Partikel der Substanz aus der Kapsel austreten können, was sich beispielsweise positiv beim Verschweissen des Kapseldeckels bemerkbar macht, indem der Kapselrand weniger durch Partikel "verunreinigt" wird.

Erfindungsgemäß ist vorgesehen, das jeweilige Organ mit gegen den Kapselboden bzw. den Kapseldeckel gerichteten Prägungen zu versehen, so dass zwischen dem jeweiligen Organ und dem Kapselboden bzw. dem Kapseldeckel Freiräume zur Bildung der Flüssigkeitskanäle verbleiben. Diese Ausbildung eignet sich insbesondere zum Kombinieren mit einem Verteil- bzw. Sammelorgan, das derart angeordnet oder ausgebildet ist, dass ein oder mehrere Aufstechmittel durch den Kapselboden bzw. den Kapseldeckel führbar ist/sind, ohne dass dabei das Verteil- bzw. Sammelorgan durchstochen wird. Bei einer derartig ausgebildeten Kapsel kann das Brühwasser von aussen über die erzeugte Aufstechöffnung in die Kapsel eingeleitet werden. Indem sich das jeweilige Organ flächig am Kapselboden bzw. Kapseldeckel abstützt, wie bei einem bevorzugten Ausführungsbeispiel beansprucht, wird zudem sichergestellt, dass die Flüssigkeitskanäle zwischen dem Kapseldeckel und dem Verteilorgan auch bei von aussen auf die Kapsel einwirkendem Druck erhalten bleiben.

Nachfolgend wird ein Ausführungsbeispiel der Erfindung anhand von Zeichnungen näher erläutert. In diesen Zeichnungen zeigt:
Fig. 1 die Einzelteile der Portionenkapsel in einer Explosionsdarstellung;
Fig. 2 einen Längsschnitt durch ein erstes Ausführungsbeispiel einer Portionenkapsel;
Fig. 3 einen Längsschnitt durch ein zweites Ausführungsbeispiel einer Portionenkapsel;
Fig. 4 einen Längsschnitt durch ein drittes Ausführungsbeispiel einer Portionenkapsel;
Fig. 5 einen Längsschnitt durch ein viertes Ausführungsbeispiel einer Portionenkapsel;
Fig. 6 einen Längsschnitt durch ein fünftes Ausführungsbeispiel einer Portionenkapsel, und
Fig. 7 einen Querschnitt durch die Portionenkapsel entlang der Linie H-H in Fig. 6.

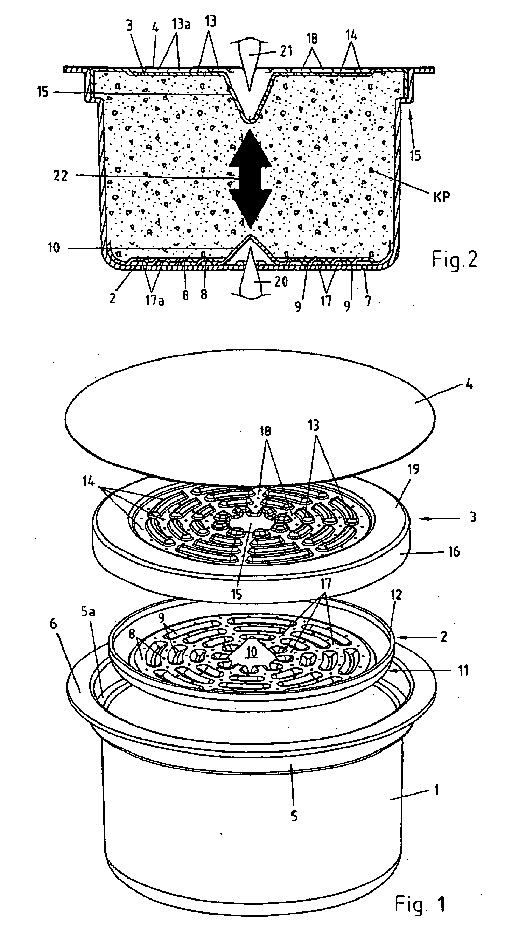

Anhand der Explosionsdarstellung gemäss Fig. 1 wird der grundsätzliche Aufbau der Portionenkapsel näher erläutert. Obwohl in derartigen Portionenkapseln grundsätzlich unterschiedlichste, mittels Wasser extrahierbare Substanzen zum Herstellen von Getränken aufgenommen werden können, wird nachfolgend von Portionenkapseln ausgegangen, die mit Kaffeepulver zur Herstellung von Normal- bzw. Espressokaffee versehen sind. Von unten nach oben gesehen besteht die Portionenkapsel aus einem Becher 1, einem unteren Sammelorgan 2, einem oberen Verteilorgan 3 sowie einem Deckel 4. Das zwischen dem Sammelorgan 2 und dem Verteilorgan 3 im Becher 1 aufzunehmende Kaffeepulver ist aus dieser Darstellung nicht ersichtlich. Sowohl der Becher 1 wie auch der Deckel 4 bestehen aus einer gasdichten Mehrschicht-Verbundfolie. Das Sammelorgan 2 und das Verteilorgan 3 sind im wesentlichen tellerförmig ausgebildet und vorzugsweise durch Tiefziehen hergestellt.

Der sich nach oben konisch leicht erweiternde Becher 1 ist im oberen Bereich mit einem umlaufenden Absatz 5 versehen, der auf der Innenseite eine kreisringförmige Schulter 5a bildet, welche dem Abstützen des oberen Verteilorgans 3 dient. Auf der Oberseite weist der Becher einen umlaufenden Rand 6 auf, an dem der Deckel 4 befestigt wird. Das Befestigen des Deckels 4 kann beispielsweise mittels Kleben oder Schweissen erfolgen. Das Sammelorgan 2 weist eine Vielzahl von kreisringsegmentförmig gestalteten Prägungen 9 auf, welche sich in Form von Erhebungen über die Unterseite des Sammelorgans 2 erheben. Wenn das Sammelorgan 2 in den Becher 1 eingesetzt ist, stehen die Prägungen 9 am Boden des Bechers 1 auf, so dass zwischen den Prägungen 9 und dem Becherboden Flüssigkeitskanäle 17 gebildet werden, die sich ausgehend von der Symmetrieachse radial nach aussen sowie zirkular um die Symmetrieachse herum erstrecken. Ausserhalb der Prägungen 9 im Bereich der Flüssigkeitskanäle 17 ist das Sammelorgan 2 mit einer Vielzahl von Öffnungen 8 versehen. Im Zentrum des Sammelorgans 2 ist eine zentrale, gegen das Kapselinnere gerichteten Vertiefung 10 angeordnet, die kegelförmig ausgebildet ist. Der flache Mittelteil des Sammelorgans 2 geht in einem Radius 11 in einen nach oben gewölbten Rand 12 über. Durch diese Gestaltung wird ein Verkanten des Sammelorgans 2 beim Einlegen in den Becher 1 verhindert.

Das obere Verteilorgan 3 ist im wesentlichen spiegelbildlich zum unteren Sammelorgan 2 ausgebildet. Das Verteilorgan 3 weist ebenfalls eine Vielzahl von kreisringsegmentförmig gestalteten Prägungen 13 auf, welche sich als Erhebungen über die Oberseite des Sammelorgans 2 erheben. Durch diese Prägungen 13 werden auf der Oberseite des Verteilorgans 3 Flüssigkeitskanäle 18 gebildet, die sich ausgehend von der Symmetrieachse radial nach aussen sowie zirkular um die Symmetrieachse herum erstrecken. Ausserhalb der Prägungen 13, im Bereich der Flüssigkeitskanäle 18, ist wiederum eine Vielzahl von Öffnungen 14 vorgesehen. Im Zentrum des Verteilorgans 3 ist eine zentrale, gegen das Kapselinnere gerichtete Vertiefung 15 angeordnet, die kegelförmig ausgebildet ist. Auf der Aussenseite ist das Verteilorgan 3 mit einem umlaufenden Rand 19 versehen, der gegenüber den Flüssigkeitskanälen 18 erhöht ist und dessen Oberseite mit der Oberseite der Prägungen 13 im wesentlichen fluchtet.

Beim Einsetzen des oberen Verteilorgans 3 stützt sich dieses mit dem nach unten gerichteten Steg 16 an der umlaufenden Schulter 5a des Absatzes 5 des Bechers 1 ab. Beim Einleiten von Brühwasser zum Aufbrühen eines Kaffeegetränks wirkt das obere Verteilorgan 3 sowohl als Filter wie auch als Wasserverteilorgan während das untere Sammelorgan 2 ebenfalls als Filter wie auch als Sammelorgan für das aufgebrühte Kaffeegetränk wirkt.

Figur 2 zeigt einen Längsschnitt durch eine fertige Portionenkapsel mit darin aufgenommenem Kaffeepulver KP. Das Kaffeepulver KP ist zwischen dem unteren Sammelorgan 2 und dem oberen Verteilorgan 3 eingeschlossen. Wie aus dieser Darstellung ersichtlich ist, werden durch die am Boden 7 des Bechers 1 aufstehenden Prägungen 9 des Sammelorgans 2 Flüssigkeitskanäle 17 gebildet. Ebenso werden durch die Prägungen 13 im Verteilorgan 3 Flüssigkeitskanäle 18 zwischen dem Verteilorgan 3 und dem Deckel 4 gebildet.

Zum Aufstechen der Portionenkapsel wird von oben und unten ein Aufstechmittel 20, 21 durch den Deckel 4 bzw. den Boden 7 gestossen. Die Aufstechmittel 20, 21 werden im Bereich der jeweiligen Vertiefung 10, 15 so durch den Deckel 4 bzw. den Boden 7 geführt, dass weder das obere Verteilorgan 3 noch das untere Sammelorgan 2 vom Aufstechmittel 20, 21 durchstochen wird. Das jeweilige Aufstechmittel erstreckt sich vielmehr in die entsprechende Vertiefung 10, 15 hinein. Das Brühwasser zum Aufbrühen des in der Kapsel aufgenommenen Kaffeepulvers wird vorzugsweise von aussen über die Aufstechöffnung eingeleitet, wie dies beispielsweise in der EP 01 810 498 beschrieben ist. Allerdings ist es keinesfalls zwingend, dass das aufgebrühte Kaffeegetränk zu einer zentralen Aufstechöffnung geleitet wird, sondern wichtig ist lediglich, dass das aufgebrühte Kaffeegetränk durch das Vorsehen eines Sammelorgans 2 möglichst ungehindert zu der Aufstechöffnung bzw. zu den Aufstechöffnungen strömen und von da aus der Kapsel austreten kann. Im vorliegenden Fall wird davon ausgegangen, dass das Brühwasser von oben nach unten durch die Kapsel geleitet wird. Es ist jedoch ohne weiteres möglich, das Brühwasser in der Gegenrichtung, also von unten nach oben durch die Kapsel strömen zu lassen, wie dies durch den doppelten Pfeil 22 angedeutet ist. Durch die Flüssigkeitskanäle 18 wird das eingeleitete Brühwasser gleichmässig über den gesamten Kapselquerschnitt verteilt. Über die Öffnungen 14 im oberen Verteilorgan 3 gelangt das Brühwasser in das Kapselinnere, wo es das Kaffeepulver KP durchströmt. Über die Öffnungen 8 im unteren Sammelorgan 2 strömt das aufgebrühte Getränk auf die Unterseite des Sammelorgans 2 und fliesst über die am Boden 7 des Bechers 1 gebildeten Flüssigkeitskanäle 17 zu einer vom Aufstechorgan 20 erzeugten, zentralen Aufstechöffnung, von wo es aus dem Kapselinneren ausströmen kann und über nicht näher dargestellte Mittel weitergeleitet wird. Durch das Vorsehen von derartig gestalteten Verteil- bzw. Sammelorganen 2, 3 wird sichergestellt, dass die in der Kapsel aufgenommenen Getränkepartikel vom Brühwasser homogen durchströmt werden und eine gleichmässige Extraktion des gesamten Kaffeepulvers erreicht wird. Im Falle, dass das Brühwasser die Kapsel unten nach oben durchströmt, würde sich die Funktion des Verteil- bzw. Sammelorgans umkehren, indem das untere Organ als Verteilorgan und das obere als Sammelorgan wirken würde. In diesem Sinne ist die Bezeichnung Verteilorgan bzw. Sammelorgan keinesfalls als einschränkend zu verstehen. Die Prägungen 9, 13 sind jedenfalls derart verteilt angeordnet, dass sich das jeweilige Organ 2, 3 flächig am Kapselboden 7 bzw. Kapseldeckel 4 abstützt. Dies ist insbesondere dann vorteilhaft, wenn, wie im vorliegenden Fall, das Brühwasser von aussen über die Aufstechöffnung in die Kapsel eingeleitet wird. Durch dieses flächige Abstützen wird sichergestellt, dass die die Flüssigkeitskanäle 17, 18 bildenden Freiräume 17a, 18a zwischen dem Kapseldeckel 4 und dem Verteilorgan 3 auch bei von aussen auf die Kapsel einwirkendem Druck erhalten bleiben. Ggf. können im Kapselinnern auch noch vertikale Trennwände vorgesehen werden, welche zu einem gleichmässigen Durchströmen des Kaffeepulvers und/oder zu einer stabilen Bauweise der Kapsel beitragen.

Der Durchmesser der in das Verteil- bzw. Sammelorgan 2, 3 eingelassenen Öffnungen 8, 14 ist vorzugsweise kleiner als der statistische Durchmesser eines einzelnen Partikels (Kaffeekorn) zum Herstellen eines Getränks, vorzugsweise kleiner als x-σ, wobei unter x der arithmetische Mittelwert des Durchmessers und unter σ die Standardabweichung zu verstehen ist. Dadurch wird sichergestellt, dass praktisch keine Partikel aus der Kapsel austreten bzw. ausgeschwemmt werden und zwar unabhängig davon, wie gross die Aufstechöffnung ist.

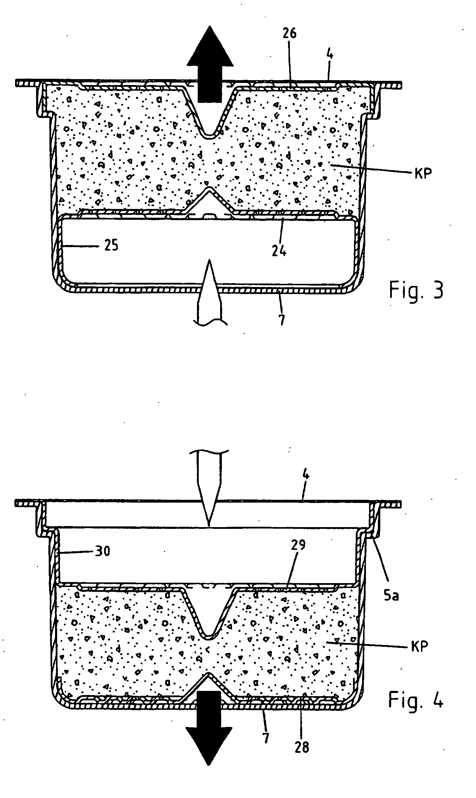

Fig. 3 zeigt einen Längsschnitt durch ein zweites Ausführungsbeispiel einer Portionenkapsel, welche nicht vollständig mit Kaffeepulver KP gefüllt ist. Das untere Verteilorgan 24 ist mittels eines Hilfsrahmens 25 soweit vom Boden 7 der Kapsel beabstandet, dass das Kaffeepulver KP den Raum zwischen dem unteren Verteilorgan 24 und dem oberen Sammelorgan 26 vollständig ausfüllt. Dadurch kann verhindert werden, dass das Kaffeepulver KP schräg in der Kapsel aufgenommen ist, was zur Folge hätte, dass sich das Brühwasser nicht gleichmässig in der Kapsel verteilen und eine Art hydraulischer Kurzschluss entstehen würde, wodurch das Kaffeepulver KP nicht gleichmässig extrahiert würde. Das Brühwasser sollte bei diesem Ausführungsbeispiel vom Boden 7 her in die Kapsel eingeleitet werden, da das untere Verteilorgan 24 keine hohen, in Richtung des Kapselbodens 7 einwirkenden hydraulische Druckkräfte aufnehmen kann.

Fig. 4 zeigt einen Längsschnitt durch ein drittes Ausführungsbeispiel einer Portionenkapsel, wobei die Kapsel wiederum nicht vollständig mit Getränkepulver gefüllt ist. Bei diesem Beispiel ist das obere Verteilorgan 29 mittels eines an der Schulter 5a und am Deckel 4 abgestützten Rahmens 30 soweit vom Deckel 4 der Kapsel beabstandet, dass das Kaffeepulver KP den Raum zwischen dem oberen Verteilorgan 29 und dem unteren Sammelorgan 28 wiederum vollständig ausfüllt. Das Brühwasser wird bei diesem Ausführungsbeispiel vom Deckel 4 her in die Kapsel eingeleitet werden.

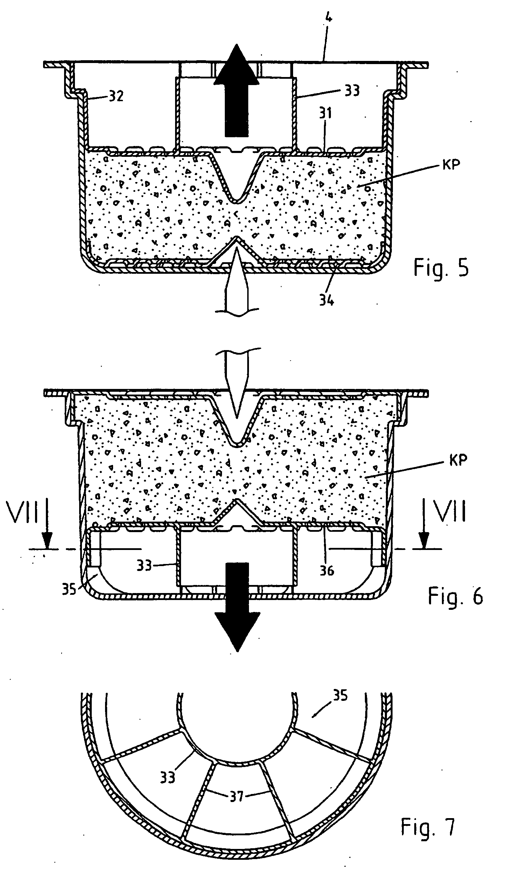

Fig. 5 zeigt eine analog zum Ausführungsbeispiel gemäss Fig. 4 ausgebildete Kapsel bei der das obere Sammelorgan 31 wiederum mittels eines Rahmens 32 soweit vom Deckel 4 der Kapsel beabstandet, dass das Kaffeepulver KP den Raum zwischen dem unteren Verteilorgan 34 und dem oberen Sammelorgan 31 vollständig ausfüllt. Allerdings ist der Rahmen 32 in diesem Fall druckfest ausgebildet, indem dieser mit einem ringförmigen Innenteil 33 und einer Mehrzahl von vertikalen Streben versehen ist, so dass das Brühwasser vom Boden her in die Kapsel eingeleitet werden kann, wie dies durch den Pfeil angedeutet ist. Es versteht sich, dass sich der Rahmen 32, 33 beim Aufbrühvorgang nicht am Deckel 4 der Kapsel abstützt, sondern an Elementen der Kaffeemaschine (nicht dargestellt). Natürlich kann des Brühwasser auch von der anderen Seite her, d.h. vom Deckel 4 durch die Kapsel geleitet werden.

Fig. 6 zeigt schliesslich ein fünftes Ausführungsbeispiel einer Portionenkapsel, bei dem das untere Sammelorgan 36 mittels eines druckfesten Rahmens 35 am Boden 7 der Kapsel abgestützt ist.

Aus der Fig. 7 ist der Rahmen gemäss Fig. 5 und 6 in einem Querschnitt entlang der Linie H-H in Fig. 6 dargestellt. Dabei sind insbesondere der ringförmige Innenteil 33 sowie die vertikalen Streben 37 ersichtlich.

Sofern das Verteil- bzw. Sammelorgan, wie in einigen der vorgängigen Ausführungsbeispiele gezeigt, vom Boden bzw. Deckel beabstandet ist, kann auf eine Vertiefung zur Aufnahme des Aufstechmittels verzichtet werden, da sich das Aufstechmittel nach dem Aufstechen in den freien Raum zwischen dem Boden bzw. Deckel und dem Verteil- bzw. Sammelorgan erstrecken kann, ohne letzteres zu durchstechen.

Anstelle einer zentralen, kegelförmig ausgebildeten Vertiefung zur Aufnahme eines Aufstechorgans könnte beispielsweise auch eine kreisringförmig verlaufende, im Querschnitt kegelförmig ausgebildeten Vertiefung vorgesehen werden. Eine derart ausgebildete Vertiefung würde sich beispielsweise dann anbieten, wenn mehrere, auf einer Kreisbahn verteilte Aufstechmittel vorgesehen sind. Anstelle einer kegelförmig ausgebildeten Vertiefung kann beispielsweise auch eine kugelförmig oder quaderförmig gestaltete Vertiefung vorgesehen werden. Um das Aufstechen des Bodens bzw. des Deckels durch das Aufstechorgan zu erleichtern, kann der Boden bzw. der Deckel mit einer Schwächung (nicht dargestellt) versehen werden. Diese Schwächung ist so ausgebildet, dass diejenige Schicht der Mehrschicht-Verbundfolie, welche gasdicht ist, nicht beeinträchtigt wird.

Mit den vorgängig gezeigten Varianten von Portionenkapseln lassen sich mehrere Vorteile erzielen:
- Durch das Verteilorgan findet über den gesamten Querschnitt der Portionenkapsel eine gleichmässige Brühwasserverteilung statt, so dass eine gleichmässige Extraktion des Kaffeepulvers gewährleistet ist. Dies ist auch bei nicht vollständig mit Kaffeepulver gefüllten Portionenkapseln der Fall;
- Das Austreten bzw. Ausschwemmen von Kaffeepartikeln wird weitgehend verhindert, was die Verschmutzung der Kaffeemaschine nachhaltig reduziert. Insofern ist auch die Grösse der Aufstechöffnung(en) von untergeordneter Bedeutung;
- Der Grösse der Aufstechöffnung(en) kommt auch im Hinblick auf die Durchlaufgeschwindigkeit keine entscheidende Bedeutung mehr zu, da dem Brühwasser, praktisch unabhängig von der Grösse der Aufstechöffnung(en), ein gleichmässiger Widerstand entgegengesetzt wird;
- Die Portionenkapseln gemäss den Fig. 2, 5 und 6 sind universell einsetzbar, indem das Brühwasser sowohl von oben nach unten wie auch in der entgegengesetzten Richtung durch die Portionenkapsel geleitet werden kann;
- Auf der Seite des Verteil- bzw. Sammelorgans braucht nur jeweils eine Aufstechöffnung vorgesehen zu werden;

## Patentansprüche

1. Portionen kapsel mit einer partikelförmigen, mittels Wasser extrahierbaren Substanz (KP) zur Herstellung eines Getränks, wobei die Kapsel einen Becher (1) mit einem Boden (7) und auf der Oberseite einem umlaufendem Rande (6), einen an dem Rande (6) befestigten Deckel (4), und ein in dem Becher (1) eingesetzten und zwischen dem Kapselboden (7) und der Substanz (KP) angeordneten Organ (2) umfasst, wobei das Organ (2) mit durch Prägungen (9) in der Erstreckungsebene des Organs (2) gebildeten Flüssigkeitskanälen (17) als Sammelorgan (2) für das hergestellte Getränk versehen ist, **dadurch gekennzeichnet, daß** das Organ (2) mit einer Vielzahl von Öffnungen (8) und gegen den Kapselboden (7) gerichteten Prägungen (9) versehen ist, so daß zwischen dem Organ (2) und dem Kapselboden (7) Freiräume (17a) zur Bildung der Flüssigkeitskanäle (17) verbleiben.

2. Portionenkapsel mit einer partikelförmigen, mittels Wasser extrahierbaren Substanz (KP) zur Herstellung eines Getränks, wobei die Kapsel einen Becher (1) mit einem Boden (7) und auf der Oberseite einem umlaufendem Rande (6), einen an dem Rande (6) befestigten Deckel (4), und ein in dem Becher (1) eingesetzten und zwischen dem Kapseldeckel (4) und der Substanz (KP) angeordneten Organ (3) umfasst wobei das Organ (3) mit durch Prägungen (13) in der Erstreckungsebene des Organs (3) gebildeten Flüssigkeitskanälen (18) als Verteilorgan (3) für das Wasser versehen ist, **dadurch gekennzeichnet, daß** das Organ (3) mit einer Vielzahl von Öffnungen (14) und gegen den Kapseldeckel (4) gerichteten Prägungen (13) versehen ist, so daß zwischen dem Organ (3) und dem Kapseldeckel (4) Freiräume (18a) zur Bildung der Flüssigkeitskanäle (18) verbleiben.

3. Portionenkapsel mit einer partikelförmigen, mittels Wasser extrahierbaren Substanz (KP) zur Herstellung eines Getränks, wobei zwischen einem Kapselboden (7) und der Substanz (KP) und/oder zwischen einem Kapseldeckel (4) und der Substanz (KP) ein mit einer Vielzahl von Öffnungen (8, 14) versehenes Organ (2, 3) angeordnet ist, wobei das jeweilige Organ (2, 3) mit durch Prägungen (9, 13) in der Erstreckungsebene des jeweiligen Organs (2,3) gebildeten Flüssigkeitskanälen (17, 18) als Verteilorgan (3) für das Wasser bzw. als Sammelorgan (2) für das hergestellte Getränk versehen ist,
**dadurch gekennzeichnet, daß** die Prägungen (9, 13) gegen den Kapselboden (7) bzw. den Kapseldeckel (4) gerichtet sind, so daß zwischen dem Organ (2, 3) und dem Kapselboden (7) bzw. dem Kapseldeckel (4) Freiräume (17a, 18a) zur Bildung der Flüssigkeitskanäle (17, 18) verbleiben, und daß sich die Flüssigkeitskanäle (17, 18) ausgehend von der Symmetrieachse radial nach außen und zirkulär um die Symmetrieachse herum erstrecken.

4. Portionen kapsel mit einer partikelförmigen, mittels Wasser extrahierbaren Substanz (KP) zur Herstellung eines Getränks, wobei zwischen einem Kapselboden (7) und der Substanz (KP) und/oder zwischen einem Kapseldeckel (4) und der Substanz (KP) ein mit einer Vielzahl von Öffnungen (8, 14) versehenes Organ (2, 3) angeordnet ist, wobei das jeweilige Organ (2, 3) mit durch Prägungen (9, 13) in der Erstreckungsebene des jeweiligen Organs (2, 3) gebildeten Flüssigkeitskanälen (17, 18) als Verteilorgan (3) für das Wasser bzw. als Sammelorgan (2) für das hergestellte Getränk versehen ist,
wobei die Portionenkapsel derart ausgelegt ist, daß sie von einem oder mehreren Aufstechmitteln durchstochen werden kann, und das Verteil- bzw. Sammelorgan (2, 3) derart angeordnet oder ausgebildet ist, daß es bei der Durchführung des oder der Aufstechmittel (20, 21) durch den Kapselboden (7) bzw. den Kapseldeckel (4) nicht durchstochen werden kann,
**dadurch gekennzeichnet, daß** das Sammelorgan (2) und/oder das Verteilorgan (3) mit zumindest einer gegen das Kapselinnere gerichteten Vertiefung (10, 15) derart ausgebildet ist/sind, daß das bzw. die Aufstechmittel (20, 21) nach dem Aufstechen des Bodens (7) bzw. des Deckels (4) aufgenommen wird/werden.

5. Portionen kapsel nach Anspruch 4, **dadurch gekennzeichnet, daß** das jeweilige Organ (2, 3) mit gegen den Kapselboden (7) bzw. den Kapseldeckel (4) gerichteten Prägungen (9, 13) versehen ist, so daß zwischen dem jeweiligen Organ (2,3) und dem Kapselboden (7) bzw. dem Kapseldeckel (4) Freiräume (17a, 17b) zur Bildung der Flüssigkeitskanäle (17, 18) verbleiben.

6. Portionenkapsel nach einem der vorhergehenden Ansprüche **dadurch gekennzeichnet, daß** die Öffnungen (8, 14) zum Durchleiten der Flüssigkeit im Bereich der Flüssigkeitskanäle (17, 18) angeordnet sind.

7. Portionenkapsel nach einem der vorangehenden Ansprüche, **dadurch gekennzeichnet, daß** die Prägungen (9, 13) derart verteilt angeordnet sind, daß sich das jeweilige Organ (2, 3) flächig am Kapselboden (7) bzw. Kapseldeckel (4) abstützt.

8. Portionenkapsel nach einem der vorhergehenden Ansprüche wenn sie vom Anspruch 3 nicht abhängt, **dadurch gekennzeichnet, daß** sich die Flüssigkeitskanäle (17, 18) ausgehend von der Symmetrieachse radial nach außen und zirkulär um die Symmetrieachse herum erstrecken.

9. Portionenkapsel nach einem der vorhergehenden Ansprüche wenn sie vom Anspruch 4 nicht abhängt, wobei die Portionenkapsel derart ausgelegt ist, daß sie von einem oder mehreren Aufstechmitteln durchstochen werden kann, **dadurch gekennzeichnet, daß** das Verteil- bzw. Sammelorgan (2, 3) derart angeordnet oder ausgebildet ist, daß es bei der Durchführung des oder der Aufstechmittel (20, 21) durch den Kapselboden (7) bzw. den Kapseldeckel (4) nicht durchstochen werden kann.

10. Portionenkapsel nach Anspruch 4 oder 9 oder einem der vorhergehenden Ansprüche 5-8 wenn sie vom 4. Anspruch abhängt, **dadurch gekennzeichnet, daß** das Sammelorgan (2) und/oder das Verteilorgan (3) mit zumindest einer gegen das Kapselinnere gerichteten Vertiefung (10, 15) derart ausgebildet ist/sind, daß das bzw. die Aufstechmittel (20, 21) nach dem Aufstechen des Bodens (7) bzw. des Deckels (4) aufgenommen wird/werden.

11. Portionenkapsel nach Anspruch 4, oder 9 oder einem der vorhergehenden Ansprüche 5-8 wenn sie vom 4. Anspruch abhängt, 6, **dadurch gekennzeichnet, daß** das Sammelorgan (24) oder das Verteilorgan (29) beabstandet vom Boden (7) bzw. vom Deckel (4) im Kapselinneren angeordnet ist.

12. Portionenkapsel nach Anspruch 4 oder 10, **dadurch gekennzeichnet, daß** die Vertiefung (10, 15) zentral im Sammelorgan (2) bzw. Verteilorgan (3) angeordnet ist.

13. Portionenkapsel nach Anspruch 10 oder 12, **dadurch gekennzeichnet, daß** die Vertiefung (10, 15) kegelförmig, kugelförmig oder quaderförmig ausgebildet ist.

14. Portionen kapsel nach einem der vorhergehenden Ansprüche, **dadurch gekennzeichnet, daß** der mittlere Durchmesser einer einzigen Öffnung (8, 14) kleiner ist als der statistische Mittelwert des Durchmessers eines einzelnen Partikels der zu extrahierenden Substanz.

15. Portionen kapsel nach einem der Ansprüche 4, 9, 10, 11, 12, oder 13, **dadurch gekennzeichnet, daß** im Boden (7) und/oder im Deckel (4) eine Schwächung derart angeordnet ist, daß das bzw. die Aufstechmittel (20, 21) durchführbar ist/sind.

16. Portionenkapsel nach einem der vorhergehenden Ansprüche, wobei die Portionenkapsel derart ausgelegt ist, daß sie von einem oder mehreren Aufstechmitteln durchstochen werden kann, **dadurch gekennzeichnet, daß** zwischen dem Kapselboden (7) und der extrahierbaren Substanz (KP) und zwischen dem Kapseldeckel (4) und der extrahierbaren Substanz (KP) das Verteil bzw. Sammelorgan (2, 3) angeordnet ist, das Sammelorgan (2) und das Verteilorgan (3) mit zumindest je einer derart angeordneten Vertiefung (10, 15) versehen ist, daß wenigstens das Aufstechmittel (20, 21) nach dem Aufstechen des Bodens (7) bzw. des Deckels (4) ohne Durchstechen des Verteil- bzw. Sammelorgans (2, 3) aufgenommen ist.

## Claims

1. A single portion cartridge containing a particulate substance (KP) which can be extracted by means of water for the preparation of a beverage, where the cartridge comprises a cup (1) with a base (7) and on the upper side a perimetric edge (6), a cover (4) fixed to the edge (6) and an element (2) inserted in the cup (1) and positioned between the base (7) of the cartridge and the substance (KP), where the element (2) is provided with liquid channels (17) formed by embossments (9) in the plane in which the element (2) extends as a collecting element (2) for the beverage prepared, **characterised in that** the element (2) is provided with a plurality of openings (8) and embossments (9) which are oriented towards the base (7) of the cartridge, in such a way that between the element (2) and the base (7) of the cartridge there are free spaces (17a) for creating the liquid channels (17).

2. A single portion cartridge containing a particulate substance (KP), which can be extracted by means of water for the preparation of a beverage, where the cartridge comprises a cup (1) with a base (7) and on the upper side a perimetric edge (6), a cover (4) fixed to the edge (6) and an element (3) inserted in the cup (1) and positioned between the cover (4) of the cartridge and the substance (KP), where the element (3) is provided with liquid channels (18) formed by embossments (13) in the plane in which the element (3) extends as a distribution element (3) for the water, **characterised in that** the element (3) is provided with a plurality of openings (14) and embossments (13) which are oriented towards the cover (4) of the cartridge, in such a way that between the element (3) and the cartridge cover (4) there are free spaces (18a) for forming the liquid channels (18).

3. A single portion cartridge containing a particulate substance (KP), which can be extracted by means of water for the preparation of a beverage, where positioned between the cartridge base (7) and the substance (KP) and/or between the cartridge cover (4) and the substance (KP) there is an element (2, 3) provided with a plurality of openings (8, 14), where the respective element (2, 3) is equipped with channels (17, 18) for the liquid formed by embossments (9, 13) in the plane in which the element (2, 3) extends as a distribution element (3) for the water or respectively a collecting element (2) for the beverage prepared, **characterised in that** the embossments (9, 13) are oriented towards the base (7) of the cartridge or respectively towards the cover (4) of the cartridge, in such a way that between the element (2, 3) and the base (7) of the cartridge and/or the cover (4) of the cartridge there are free spaces (17a, 18a) for forming the liquid channels (17, 18), and also being **characterised in that** the liquid channels (17, 18) extend radially outwards from the axis of symmetry and in a circular fashion around the axis of symmetry.

4. A single portion cartridge containing a particulate substance (KP), which can be extracted by means of water for the preparation of a beverage, where positioned between the cartridge base (7) and the substance (KP) and/or between the cartridge cover (4) and the substance (KP), there is an element (2, 3) provided with a plurality of openings (8, 14), where the respective element (2, 3) is equipped with channels (17, 18) for the liquid formed by embossments (9, 13) in the plane in which the respective element (2, 3) extends as a distribution element (3) for the water or respectively a collecting element (2) for the beverage prepared, where the single portion cartridge is designed in such a way that it can be pierced by one or more piercing elements and the distribution or respectively the collecting element (2, 3) is positioned or made in such a way that it cannot be pierced at the moment when the piercing element or elements (20, 21) pass through the base (7) and/or the cover (4) of the cartridge, **characterised in that** the collecting element (2) and/or the distribution element (3) is/are made with at least one depression (10, 15) which is oriented towards the interior of the cartridge, in such a way as to accommodate the piercing element or elements (20, 21) after the base (7) and/or the cover (4) has been pierced.

5. The single portion cartridge according to claim 4, **characterised in that** the respective element (2, 3) is equipped with embossments (9, 13) which are oriented towards the base (7) or respectively the cover (4) of the cartridge, in such a way that between the respective element (2, 3) and the base (7) or respectively the cover (4) of the cartridge there are free spaces (17a, 17b) for forming the liquid channels (17, 18).

6. The single portion cartridge according to any of the foregoing claims, **characterised in that** the openings (8, 14) for conveying the liquid are arranged in the liquid channels (17, 18) zone.

7. The single portion cartridge according to any of the foregoing claims, **characterised in that** the embossments (9, 13) are distributed in such a way that the respective element (2, 3) is supported horizontally on the base (7) and/or on the cover (4) of the cartridge.

8. The single portion cartridge according to any of the foregoing claims when it does not depend on claim 3, **characterised in that** the liquid channels (17, 18) extend radially outwards from the axis of symmetry and in a circular fashion around the axis of symmetry.

9. The single portion cartridge according to any of the foregoing claims when it does not depend on claim 4, where the single portion cartridge is made in such a way that it can be pierced by one or more piercing elements, **characterised in that** the distribution element or respectively the collecting element (2, 3) is made or positioned in such a way that it cannot be pierced when the piercing element or elements (20, 21) pass through the base (7) or respectively the cover (4) of the cartridge.

10. The single portion cartridge according to claim 4 or 9, or according to any of the foregoing claims from 5 to 8 when it depends on claim 4, **characterised in that** the collecting element (2) and/or the distribution element (3) is/are made with at least one depression (10, 15) which is oriented towards the interior of the cartridge, in such a way as to accommodate the piercing element or elements (20, 21) after the base (7) or the cover (4) has been pierced.

11. The single portion cartridge according to claim 4 or 9, or according to any of the foregoing claims from 5 to 8 when it depends on claim 4, **characterised in that** the collecting element (24) or the distribution element (29) is positioned a predetermined distance from the base (7) or respectively from the cover (4) inside the cartridge.

12. The single portion cartridge according to claim 4 or 10, **characterised in that** the depression (10, 15) is positioned centrally in the collecting element (2) or respectively in the distribution element (3).

13. The single portion cartridge according to claim 10 or 12, **characterised in that** the depression (10, 15) has the shape of a cone, sphere or parallelepiped.

14. The single portion cartridge according to any of the foregoing claims, **characterised in that** the average diameter of a single opening (8, 14) is less than the statistical average of the diameter of a single particle of the substance to be extracted.

15. The single portion cartridge according to claim 4, 9, 10, 11, 12 or 13, **characterised in that** in the base (7) and/or in the cover (4) there is a weakened area for allowing the passage of the piercing element or elements (20, 21).

16. The single portion cartridge according to any of the foregoing claims, where the single portion cartridge is made in such a way that it can be pierced by one or more piercing elements, **characterised in that** between the base (7) of the cartridge and the extractable substance (KP) and between the cover (4) of the cartridge and the extractable substance (KP) there is the distribution element or the collecting element (2, 3), the collecting element (2) and the distribution element (3) being equipped with at least one depression (10, 15) which is positioned in such a way that it accommodates the piercing element or elements (20, 21) without the collecting element or respectively the distribution element (2, 3) being pierced after the base (7) or respectively the cover (4) has been pierced.

## Revendications

1. Cartouche mono-dose contenant une substance (KP) sous forme de particules, extractible au moyen d'eau pour la préparation d'une boisson, où la cartouche comprend un godet (1) avec un fond (7) et sur le côté supérieur un bord périmétral (6), un couvercle (4) fixé au bord (6) et un élément (2) inséré dans le godet (1) et placé entre le fond (7) de la cartouche et la substance (KP), où l'élément (2) est doté de canaux à liquide (17), définis par des reliefs (9) sur le plan d'extension de l'élément (2), pour servir d'élément (2) de collecte de la boisson préparée, **caractérisée en ce que** l'élément (2) est doté d'une pluralité d'orifices (8) et de reliefs (9) orientés vers le fond (7) de la cartouche, de manière à ce qu'il y ait des espaces libres (17a) entre l'élément (2) et le fond (7) de la cartouche pour définir les canaux à liquide (17).

2. Cartouche mono-dose contenant une substance (KP) sous forme de particules, extractible au moyen d'eau pour la préparation d'une boisson, où la cartouche comprend un godet (1) avec un fond (7) et sur le bord supérieur un bord périmétral (6), un couvercle (4) fixé au bord (6) et un élément (3) inséré dans le godet (1) et placé entre le couvercle (4) de la cartouche et la substance (KP), où l'élément (3) est doté de canaux à liquide (18), définis par des reliefs (13) sur le plan d'extension de l'élément (3), pour servir d'élément (3) de distribution de l'eau, **caractérisée en ce que** l'élément (3) est doté d'une pluralité d'orifices (14) et de reliefs (13) orientés vers le couvercle (4) de la cartouche, de manière à ce qu'il y ait des espaces libres (18a) entre l'élément (3) et le couvercle (4) de la cartouche pour former les canaux à liquide (18).

3. Cartouche mono-dose contenant une substance (KP) sous forme de particules, extractible au moyen d'eau pour la préparation d'une boisson, où un élément (2, 3) doté d'une pluralité d'orifices (8, 14) est placé entre un fond (7) de la cartouche et la substance (KP) et/ou entre un couvercle (4) de la cartouche et la substance (KP), où l'élément (2, 3) respectif est doté de canaux à liquide (17, 18), définis par des reliefs (9, 13) sur le plan d'extension de l'élément (2, 3), pour servir d'élément (3) de distribution de l'eau ou, respectivement, d'élément (2) de collecte de la boisson préparée, **caractérisée en ce que** les reliefs (9, 13) sont orientés vers le fond (7) de la cartouche ou, respectivement, vers le couvercle (4) de la cartouche de manière à ce qu'il y ait des espaces libres (17a, 18a) entre l'élément (2, 3) et le fond (7) de la cartouche et/ou le couvercle (4) de la cartouche pour former les canaux à liquide (17, 18), et **en ce que** les canaux à liquide (17, 18) s'étendent radialement vers l'extérieur à partir de l'axe de symétrie et de façon circulaire autour de ce même axe de symétrie.

4. Cartouche mono-dose contenant une substance (KP) sous forme de particules, extractible au moyen d'eau pour la préparation d'une boisson, où un élément (2, 3) doté d'une pluralité d'orifices (8, 14) est placé entre un fond (7) de la cartouche et la substance (KP) et/ou entre un couvercle (4) de la cartouche et la substance (KP), où l'élément (2, 3) respectif est doté de canaux à liquide (17, 18), définis par des reliefs (9, 13) sur le plan d'extension de l'élément (2, 3) respectif, pour servir d'élément (3) de distribution de l'eau ou, respectivement, d'élément (2) de collecte de la boisson préparée, où la cartouche mono-dose est conçue de manière à pouvoir être percée par un ou plusieurs moyens de perçage et l'élément de distribution ou respectivement de collecte (2, 3) est placé ou réalisé de manière à ne pas pouvoir être percé lors du passage du moyen ou des moyens de perçage (20, 21) à travers le fond (7) et/ou le couvercle (4) de la cartouche, **caractérisée en ce que** l'élément de collecte (2) et/ou l'élément de distribution (3) est/sont réalisé(s) avec au moins un renfoncement (10, 15) orienté vers l'intérieur de la cartouche, de manière à loger le moyen et/ou les moyens de perçage (20, 21) suite au perçage du fond (7) et/ou du couvercle (4).

5. Cartouche mono-dose selon la revendication 4, **caractérisée en ce que** l'élément (2, 3) respectif est doté de reliefs (9, 13) orientés vers le fond (7) ou respectivement le couvercle (4) de la cartouche, de manière à ce qu'il y ait des espaces libres (17a, 17b) entre l'élément (2, 3) respectif et le fond (7) ou respectivement le couvercle (4) de la cartouche pour former les canaux à liquide (17, 18).

6. Cartouche mono-dose selon une des revendications précédentes, **caractérisée en ce que** les orifices (8, 14) destinés au transit du liquide sont disposés dans la zone des canaux à liquide (17, 18).

7. Cartouche mono-dose selon une des revendications précédentes, **caractérisée en ce que** les reliefs (9, 13) sont répartis de telle sorte que l'élément (2, 3) respectif est supporté à plat sur le fond (7) et/ou sur le couvercle (4) de la cartouche.

8. Cartouche mono-dose selon une des revendications précédentes quand ne dépendant pas de la revendication 3, **caractérisée en ce que** les canaux à liquide (17, 18) s'étendent radialement vers l'extérieur à partir de l'axe de symétrie et de façon circulaire autour de ce même axe de symétrie.

9. Cartouche mono-dose selon une des revendications précédentes quand ne dépendant pas de la revendication 4, ou la cartouche mono-dose est réalisée de manière à pouvoir être percée par un ou plusieurs moyens de perçage, **caractérisée en ce que** l'élément de distribution ou respectivement l'élément de collecte (2, 3) est réalisé ou placé de manière à ne pas pouvoir être percé lors du passage du moyen ou des moyens de perçage (20, 21) à travers le fond (7) ou respectivement le couvercle (4) de la cartouche.

10. Cartouche mono-dose selon la revendication 4 ou 9 ou selon une des revendications précédentes de 5 à 8 quand dépendant de la revendication 4, **caractérisée en ce que** l'élément de collecte (2) et/ou l'élément de distribution (3) est/sont réalisé(s) avec au moins un renfoncement (10, 15) orienté vers l'intérieur de la cartouche, de manière à loger le moyen ou les moyens de perçage (20, 21) suite au perçage du fond (7) ou du couvercle (4).

11. Cartouche mono-dose selon la revendication 4 ou 9 ou selon une des revendications précédentes de 5 à 8 quand dépendant de la revendication 4, **caractérisée en ce que** l'élément de collecte (24) ou l'élément de distribution (29) est placé à une certaine distance du fond (7) ou respectivement du couvercle (4) à l'intérieur de la cartouche.

12. Cartouche mono-dose selon la revendication 4 ou 10, **caractérisée en ce que** le renfoncement (10, 15) est disposé au centre dans l'élément de collecte (2) ou respectivement dans l'élément de distribution (3).

13. Cartouche mono-dose selon la revendication 10 ou 12, **caractérisée en ce que** le renfoncement (10, 15) est réalisé en forme de cône, sphère ou parallélépipède.

14. Cartouche mono-dose selon une des revendications précédentes, **caractérisée en ce que** le diamètre moyen d'un orifice individuel (8, 14) est inférieur à la valeur moyenne statistique du diamètre d'une particule individuelle de la substance à extraire.

15. Cartouche mono-dose selon une des revendications 4, 9, 10, 11, 12 ou 13, **caractérisée en ce qu'**un affaiblissement est prévu dans le fond (7) et/ou dans le couvercle (4) de manière à permettre le passage du moyen ou des moyens de perçage (20, 21).

16. Cartouche mono-dose selon une des revendications précédentes, où la cartouche mono-dose est réalisée de manière à pouvoir être percée par un ou plusieurs moyens de perçage, **caractérisée en ce que** l'élément de distribution ou l'élément de collecte (2, 3) est prévu entre le fond (7) de la cartouche et la substance extractible (KP) et entre le couvercle (4) de la cartouche et la substance extractible (KP), l'élément de collecte (2) et l'élément de distribution (3) sont dotés d'au moins un renfoncement (10, 15) disposé de manière à loger le moyen ou les moyens de perçage (20, 21) suite au perçage du fond (7) ou respectivement du couvercle (4) sans percer l'élément de collecte ou respectivement l'élément de distribution (2, 3).
